# EUROPEAN PATENT APPLICATION

(11) **EP 4 273 089 A1**
(43) Date of publication of application: **08.11.2023**
(21) Application number: 22750052.7
(22) Date of filing: 04.02.2022
(51) Int. Cl.: B67D 1/08, B67D 1/00

(54) **HOT WATER GENERATION APPARATUS, WATER PURIFIER COMPRISING SAME, AND METHOD FOR CONTROLLING HOT WATER GENERATION APPARATUS**

(30) Priority: 08.02.2021 KR 20210017454
(71) Applicant: Coway Co., Ltd., Gongju-si, Chungcheongnam-do 32508 (KR)
(72) Inventor: KIM, Jae Man, Gongju-si, Chungcheongnam-do 32508 (KR); KIM, Jong Min, Gongju-si, Chungcheongnam-do 32508 (KR); YE, Byung Hyo, Gongju-si, Chungcheongnam-do 32508 (KR); LEE, Young Jae, Gongju-si, Chungcheongnam-do 32508 (KR)
(74) Representative: BCKIP Part mbB
(86) International application number: PCT/KR2022/001766
(87) International publication number: WO 2022/169303

(57) **Abstract**

The present invention relates to a hot water generation apparatus and a water purifier comprising same and, more particularly, to a hot water generation apparatus and a water purifier comprising same, in which a collection space inside a case member is disposed above a receiving space in which raw water is accommodated, and has an inclination surface having a predetermined angle of inclination, and a steam outlet through which steam can be discharged is disposed above the collection space, separately from a hot water outlet, so that steam is removed in advance through the steam outlet along the inclination surface before hot water is discharged to the outside. Therefore, since hot water free of steam is discharged and a regular flow of hot water is formed in a straight line along the direction of gravity, user safety is enhanced, aesthetics are improved, and the best user experience can be provided.

## Description

### [Technical Field]

The present invention relates to a hot water generation apparatus, a water purifier including the same and a method for controlling the hot water generation apparatus, and more specifically to a hot water generation apparatus in which a collection space which is disposed at an upper portion of a receiving space in which raw water is accommodated inside a case member and has an inclination surface having a predetermined inclination angle is introduced, and a steam outlet through which steam can be discharged separately from the hot water outlet at an upper portion of the collection space is disposed such that steam is removed along the inclination surface in advance through the steam outlet, and hot water without steam is discharged to form a regular flow of hot water in a straight line along the direction of gravity, thereby securing user safety and enhancing aesthetics to improve user satisfaction, a water purifier including the same and a method for controlling the hot water generation apparatus.

### [Background Art]

In general, a water purifier is an apparatus for providing purified water by filtering raw water supplied from the outside, and the direct-type water purifier without a storage tank has been widely used in accordance with an increase in the users' demand for fresher water and a trend of miniaturization of products. Further, in addition to providing purified water, the direct-type water purifier that generates and provides cold water or hot water by using purified water has also been widely used. In particular, recent direct-type water purifiers employ an instantaneous hot water heater to heat the supplied raw water, and this instantaneous hot water heater has a very small flow rate of purified water accommodated therein such that hot water corresponding to the target temperature can be generated in a short period of time.

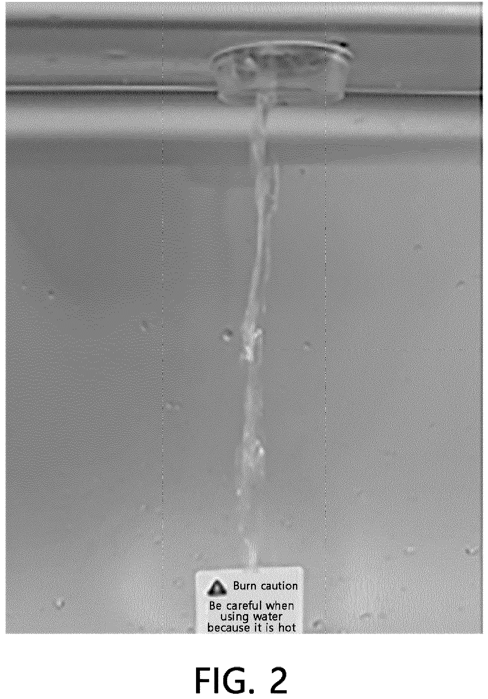

The direct water treatment apparatus disclosed in Korea Patent Application Laid-Open No. 2017-0079100 of Coway Co., Ltd. uses an instantaneous heating device to heat purified water at room temperature that is filtered by a filtration unit and then discharges hot water to the outlet side without additional treatment. In general, when hot water is heated by using an instantaneous heating device including a planar heating heater and the like, a certain amount of steam is generated at the same time as the temperature of the hot water rises. As a result, as disclosed in the above related art document, when hot water is discharged directly from the instantaneous heating device in which hot water is stored without any separate treatment, steam is also released along with the hot water. Such steam affects the final discharge of hot water such that as confirmed in FIG. 2, the flow of hot water does not form a straight line, but forms an irregular flow. When the discharge flow of hot water is irregular in this way, some of the high-temperature hot water splashes in an unexpected direction, which poses a safety risk, and there is a problem in that it does not provide an excellent user experience because it is not aesthetically pleasing.

The instantaneous warmer for hot water supply of a water purifier having a slim structure by using a heater as disclosed in Korean Patent Application Laid-Open No. 10-1637210 of Eunsung Industrial is equipped with an air vent on the upper portion of the body to discharge only water that does not contain air bubbles, and although some disclosures have been made for discharging air bubbles through this, there is no valve structure that is capable of controlling the flow of a fluid associated with the body and a control method of the valve. Therefore, there is a problem in that hot water may be lost through the air vent for discharging the air bubbles, and since the air bubbles are discharged only depending on the natural vapor pressure, there is a problem in that it is difficult to form a pressure for effectively discharging the steam.

### [Disclosure]

### [Technical Problem]

In order to solve the above problems, the hot water generation apparatus according to the present invention is directed to securing user safety and enhancing aesthetics to improve user satisfaction by introducing a collection space which is disposed at an upper portion of a receiving space in which raw water is accommodated inside a case member and has an inclination surface having a predetermined inclination angle is introduced, and disposing a steam outlet through which steam can be discharged separately from the hot water outlet at an upper portion of the collection space such that steam is removed along the inclination surface in advance through the steam outlet, and hot water without steam is discharged to form a regular flow of hot water in a straight line along the direction of gravity.

The hot water generation apparatus according to an exemplary embodiment of the present invention is directed to providing a collection space that can achieve the miniaturization of apparatus and can sufficiently accommodate the steam that is vaporized from the heated purified water by limiting the inclination angle of an inclination surface of the collecting space within the optimal angle.

The hot water generation apparatus according to an exemplary embodiment of the present invention is directed to improving the sensing accuracy of a temperature sensing member by disposing a portion of the water outlet on the collecting space by using the spatial margin that is secured through the introduction of the collection space such that the temperature sensing member is disposed under the water outlet.

The hot water generation apparatus according to an exemplary embodiment of the present invention is directed to providing accurate temperature information to the user by disposing the temperature sensing member away from the water outlet and disposing within a predetermined radius from the water outlet such that the temperature sensing member senses a temperature close to the temperature immediately before water dispensing.

The hot water generation apparatus according to an exemplary embodiment of the present invention is directed to improving space utilization by installing at least a portion of the water outlet to cross a boundary line between the receiving space and the collection space such that the collection space is sufficiently secured, and at the same time, a sufficient space is provided in which the temperature sensing member can be disposed between a heating member and a water outlet.

The hot water generation apparatus according to an exemplary embodiment of the present invention is directed to improving the effect due to the introduction of a steam outlet by integrally controlling a raw water supply valve, a hot water extraction valve and a steam discharge valve that control the inflow and outflow of the hot water generation apparatus through a unique control member such that steam can be discharged more effectively while minimizing the loss of hot water through the steam outlet.

The hot water generation apparatus according to an exemplary embodiment of the present invention is directed to maximizing the discharge of steam by controlling to a first state in which the raw water supply valve and the hot water dispensing valve are closed, and the steam discharge valve is opened, when a hot water dispensing signal is initially applied; controlling to a second state in which the raw water supply valve is opened, when the heated raw water has a temperature higher than a predetermined temperature in the first state; and controlling to a third state in which the steam discharge valve is closed, and at the same time, the hot water dispensing valve is opened, after a predetermined time from the second state such that the raw water supply valve is opened before the hot water dispensing valve at the time of the initial water discharging.

The hot water generation apparatus according to an exemplary embodiment of the present invention is directed to preventing user inconvenience caused by delayed hot water output to provide users with optimal usage experience even in unexpected situations by controlling to a second state in which the raw water supply valve is opened even when the heated raw water is below a predetermined temperature, when the first state is maintained for a critical time or longer.

The hot water generation apparatus according to an exemplary embodiment of the present invention is directed to improving the steam release effect without spilling hot water by repeating the control of opening the steam discharge valve for a certain period of time and then closing at predetermined intervals in order to repeat filling the steam to reach a certain pressure and then temporarily discharging the steam while continuous water dispensing is in progress.

The water purifier according to the present invention is directed to preventing safety accidents caused by irregular hot water flow when the user dispenses hot water in advance and providing users with an aesthetically excellent hot water flow by including a hot water generating unit that is capable of providing the above-described effects to deliver hot water in a state where steam has been removed to a dispensing unit.

### [Technical Solution]

In order to achieve the above objects, the hot water generation apparatus according to the present invention may include a case member which is provided with a receiving space in which raw water is accommodated and a collection space that is disposed at an upper portion of the receiving space; a water inlet which is disposed at a lower portion of the case member such that the raw water flows into the case member; a plate-shaped heating member which is provided on a sidewall of the case member so as to heat raw water that is accommodated inside the case member; a water outlet which is disposed on the upper side of the plate-shaped heating member such that the raw water heated by the plate-shaped heating member flows to the outside; a steam outlet which is disposed at an upper portion of the collection space such that steam that is vaporized from the heated raw water is discharged to the outside through the collection space; and a temperature sensing member for sensing the temperature of raw water accommodated inside the case member, wherein the collection space has an inclination surface which has a predetermined inclination angle to guide the steam toward the steam outlet and is inclined toward the steam outlet, and wherein the temperature sensing member is installed between the water outlet and the plate-shaped heating member based on a height direction of the case member.

In the hot water generation apparatus according to an exemplary embodiment of the present invention, the predetermined inclination angle may be within 25 degrees based on a water surface of the raw water.

In the hot water generation apparatus according to an exemplary embodiment of the present invention, the temperature sensing member may be installed to be located below the water outlet.

In the hot water generation apparatus according to an exemplary embodiment of the present invention, the temperature sensing member may be installed within a radius of 20 mm around the water outlet.

In the hot water generation apparatus according to an exemplary embodiment of the present invention, at least a portion of the water outlet may be installed so as to cross a boundary line between the receiving space and the collection space among the side walls.

The hot water generation apparatus according to an exemplary embodiment of the present invention may further include a raw water supply member which is a tubular member having one end connected to the water inlet and the other end connected to a raw water supply unit, and is provided with a raw water supply valve that allows or blocks the raw water to flow into the case member; a hot water dispensing member which is a tubular member having one end connected to the water inlet and the other end connected to a dispensing unit, and is provided with a hot water extraction valve that allows or blocks the heated raw to flow out of the case member; a steam discharge member which is a tubular member having one end connected to the steam outlet and the other end connected to a water drain, and is provided with a steam discharge valve that allows or blocks the steam to flow out of the case member; and a control member which integrally controls the opening and closing of the raw water supply valve, the hot water dispensing valve and the steam discharge valve.

In the hot water generation apparatus according to an exemplary embodiment of the present invention, the control member may control to a first state in which the raw water supply valve and the hot water dispensing valve are closed, and the steam discharge valve is opened, when a hot water dispensing signal is initially applied, control to a second state in which the raw water supply valve is opened, when the heated raw water has a temperature higher than a predetermined temperature in the first state, and control to a third state in which the steam discharge valve is closed, and at the same time, the hot water dispensing valve is opened, after a predetermined time from the second state.

In the hot water generation apparatus according to an exemplary embodiment of the present invention, the control member may control to a second state in which the raw water supply valve is opened even when the heated raw water is below the predetermined temperature, when the first state is maintained for a critical time or longer.

In the hot water generation apparatus according to an exemplary embodiment of the present invention, the control member may repeat the control of opening and closing the steam discharge valve for a certain time at predetermined intervals, while the raw water supply valve and the hot water dispensing valve are opened, and continuous water dispensing is in progress.

The water purifier according to an exemplary embodiment of the present invention may include a pressing unit for pressurizing and supplying raw water; a filtering unit which is provided with a filter member to generate purified water by filtering the pressurized raw water supplied from the pressing unit; a hot water generating unit for generating hot water by receiving the pressurized purified water from the filtering unit; a dispensing unit for discharging the hot water generated from the hot water generating unit to the outside; a water drain unit for discharging unnecessary raw water generated from the filtering unit to the outside; and a control unit for controlling the operation of each unit, wherein the hot water generating unit is provided with a case member which is provided with a receiving space in which the purified water is accommodated and a collection space that is disposed at an upper portion of the receiving space, a water inlet which is disposed at a lower portion of the case member such that the purified water flows into the case member, a plate-shaped heating member which is provided on a sidewall of the case member so as to heat purified water that is accommodated inside the case member, a water outlet which is disposed on the upper side of the plate-shaped heating member such that the purified water heated by the plate-shaped heating member flows out, a steam outlet which is disposed at an upper portion of the collection space such that steam that is vaporized from the heated purified water is discharged to the outside through the collection space, and a temperature sensing member for sensing the temperature of purified water accommodated inside the case member, wherein the collection space has an inclination surface which has a predetermined inclination angle to guide the steam toward the steam outlet and is inclined toward the steam outlet, wherein the temperature sensing member is installed between the water outlet and the plate-shaped heating member based on a height direction of the case member, wherein the hot water generating unit and the filtering unit are connected through a purified water supply member having a purified water supply valve that allows or blocks the purified water to flow into the case member, wherein the hot water generating unit and the dispensing unit are connected through a hot water dispensing member having a hot water extraction valve that allows or blocks the hot water to flow out of the case member, wherein the hot water generating unit and the water drain unit are connected through a steam discharge member having a steam discharge valve that is provided with a steam discharge valve that allows or blocks the steam to flow out of the case member, and wherein the control unit integrally controls the opening and closing of the purified water supply valve, the hot water extraction valve and the steam discharge valve.

The method for controlling a hot water generation apparatus according to an exemplary embodiment of the present invention, which includes a case member which is provided with a receiving space in which raw water is accommodated and a collection space that is disposed at an upper portion of the receiving space, a water inlet which is disposed at a lower portion of the case member such that the raw water flows into the case member, a plate-shaped heating member which is provided on a sidewall of the case member so as to heat raw water that is accommodated inside the case member, a water outlet which is disposed on the upper side of the plate-shaped heating member such that the raw water heated by the plate-shaped heating member flows out, a steam outlet which is disposed at an upper portion of the collection space such that steam that is vaporized from the heated raw water is discharged to the outside through the collection space, a raw water supply valve for allowing or blocking the raw water to flow inside the case member, a hot water dispensing valve for allowing or blocking the heated raw water to flow out of the case member, and a steam discharge valve for allowing or blocking the steam to flow out of the case member, may include the steps of controlling to a first state in which the raw water supply valve and the hot water dispensing valve are closed, and the steam discharge valve is opened, when a hot water dispensing signal is initially applied; controlling to a second state in which the raw water supply valve is opened, when the heated raw water has a temperature higher than a predetermined temperature in the first state; and controlling to a third state in which the steam discharge valve is closed, and at the same time, the hot water dispensing valve is opened, after a predetermined time from the second state.

The method for controlling a hot water generation apparatus according to an exemplary embodiment of the present invention may further include the step of repeating the control of opening and closing the steam discharge valve for a certain time at predetermined intervals, while the raw water supply valve and the hot water dispensing valve are opened, and continuous water dispensing is in progress.

### [Advantageous Effects]

According to the above configurations, the hot water generation apparatus according to the present invention provides the effects of securing user safety and enhancing aesthetics to improve user satisfaction by introducing a collection space which is disposed at an upper portion of a receiving space in which raw water is accommodated inside a case member and has an inclination surface having a predetermined inclination angle is introduced, and disposing a steam outlet through which steam can be discharged separately from the hot water outlet at an upper portion of the collection space such that steam is removed along the inclination surface in advance through the steam outlet, and hot water without steam is discharged to form a regular flow of hot water in a straight line along the direction of gravity.

The hot water generation apparatus according to an exemplary embodiment of the present invention provides the effect of providing a collection space that can achieve the miniaturization of apparatus and can sufficiently accommodate the steam that is vaporized from the heated purified water by limiting the inclination angle of an inclination surface of the collecting space within the optimal angle.

The hot water generation apparatus according to an exemplary embodiment of the present invention provides the effect of improving the sensing accuracy of a temperature sensing member by disposing a portion of the water outlet on the collecting space by using the spatial margin that is secured through the introduction of the collection space such that the temperature sensing member is disposed under the water outlet.

The hot water generation apparatus according to an exemplary embodiment of the present invention provides the effect of providing accurate temperature information to the user by disposing the temperature sensing member away from the water outlet and disposing within a predetermined radius from the water outlet such that the temperature sensing member senses a temperature close to the temperature immediately before water dispensing.

The hot water generation apparatus according to an exemplary embodiment of the present invention provides the effect of improving space utilization by installing at least a portion of the water outlet to cross a boundary line between the receiving space and the collection space such that the collection space is sufficiently secured, and at the same time, a sufficient space is provided in which the temperature sensing member can be disposed between a heating member and a water outlet.

The hot water generation apparatus according to an exemplary embodiment of the present invention provides the effect of improving the effect due to the introduction of a steam outlet by integrally controlling a raw water supply valve, a hot water extraction valve and a steam discharge valve that control the inflow and outflow of the hot water generation apparatus through a unique control member such that steam can be discharged more effectively while minimizing the loss of hot water through the steam outlet.

The hot water generation apparatus according to an exemplary embodiment of the present invention provides the effect of maximizing the discharge of steam by controlling to a first state in which the raw water supply valve and the hot water dispensing valve are closed, and the steam discharge valve is opened, when a hot water dispensing signal is initially applied; controlling to a second state in which the raw water supply valve is opened, when the heated raw water has a temperature higher than a predetermined temperature in the first state; and controlling to a third state in which the steam discharge valve is closed, and at the same time, the hot water dispensing valve is opened, after a predetermined time from the second state such that the raw water supply valve is opened before the hot water dispensing valve at the time of the initial water discharging.

The hot water generation apparatus according to an exemplary embodiment of the present invention provides the effect of preventing user inconvenience caused by delayed hot water output to provide users with optimal usage experience even in unexpected situations by controlling to a second state in which the raw water supply valve is opened even when the heated raw water is below a predetermined temperature, when the first state is maintained for a critical time or longer.

The hot water generation apparatus according to an exemplary embodiment of the present invention provides the effect of improving the steam release effect without spilling hot water by repeating the control of opening the steam discharge valve for a certain period of time and then closing at predetermined intervals in order to repeat filling the steam to reach a certain pressure and then temporarily discharging the steam while continuous water dispensing is in progress.

The water purifier according to the present invention provides the effects of preventing safety accidents caused by irregular hot water flow when the user dispenses hot water in advance and providing users with an aesthetically excellent hot water flow by including a hot water generating unit that is capable of providing the above-described effects to deliver hot water in a state where steam has been removed to a dispensing unit.

### [Description of Drawings]

FIG. 1 is a configuration diagram illustrating each configuration and the flow of a fluid of a water purifier according to the related art.
FIG. 2 is an image illustrating the flow of hot water dispensed from the water purifier according to the related art.
FIG. 3 is a configuration diagram illustrating each configuration of the water purifier and the flow of a fluid according to an exemplary embodiment of the present invention.
FIG. 4 is an image illustrating the flow of hot water dispensed from a water purifier including a hot water generating unit according to an exemplary embodiment of the present invention.
FIG. 5 is a plan view illustrating a part of the hot water generating unit according to an exemplary embodiment of the present invention.
FIG. 6 is a side view illustrating a part of the hot water generating unit according to an exemplary embodiment of the present invention.
FIG. 7 is a graph illustrating the sensing accuracy of the temperature sensing member included in the hot water generating unit according to an exemplary embodiment of the present invention compared with the related art.
FIG. 8 is a flowchart illustrating that the control unit (or a control member of the hot water generation apparatus) of a water purifier including a hot water generating unit according to an exemplary embodiment of the present invention sequentially controls each configuration.
FIG. 9 is a table showing the opening and closing states of each of the valves included in the hot water generating unit according to the fluid inflow and outflow states of the hot water generating unit according to an exemplary embodiment of the present invention.

### [Modes of the Invention]

Terms and words used in the present specification and claims should not be construed as limited to their usual or dictionary definition, and they should be interpreted as a meaning and concept consistent with the technical idea of the present invention based on the principle that inventors may appropriately define the terms and concept in order to describe their own invention in the best way.

Accordingly, the exemplary embodiments described in the present specification and the configurations shown in the drawings correspond to preferred exemplary embodiments of the present invention, and do not represent all the technical spirit of the present invention, and thus, the configurations may have various examples of equivalent and modification that can replace them at the time of filing the present invention.

It is understood that the terms "include" or "have" when used in the present specification, are intended to describe the presence of stated features, integers, steps, operations, elements, components and/or a combination thereof, but not preclude the possibility of the presence or addition of one or more other features, integers, steps, operations, elements, components or a combination thereof.

The presence of an element in/on "front", "rear", "upper or above or top" or "lower or below or bottom" of another element includes not only being disposed in/on "front", "rear", "upper or above or top" or "lower or below or bottom" directly in contact with other elements, but also cases in which another element being disposed in the middle, unless otherwise specified. In addition, unless otherwise specified, that an element is "connected" to another element includes not only direct connection to each other but also indirect connection to each other.

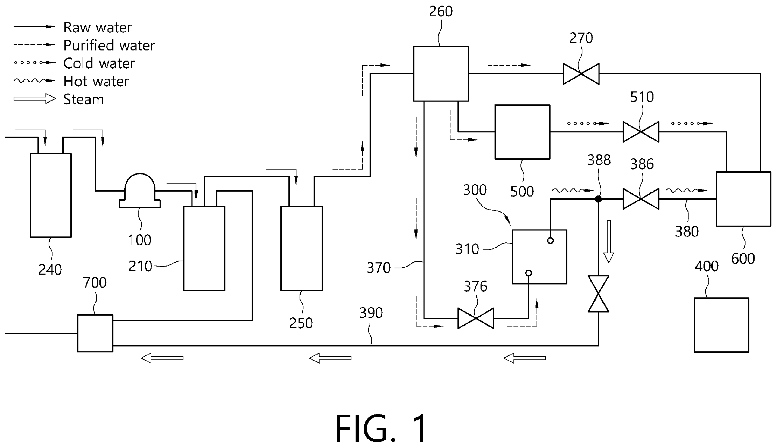

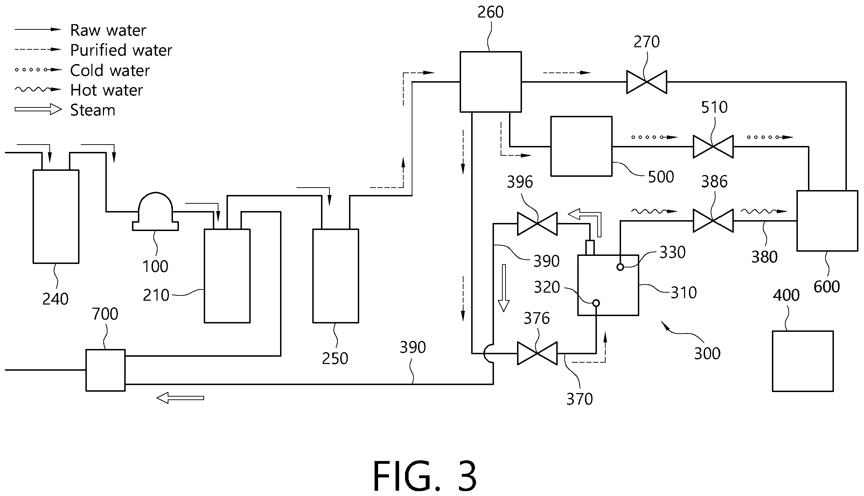

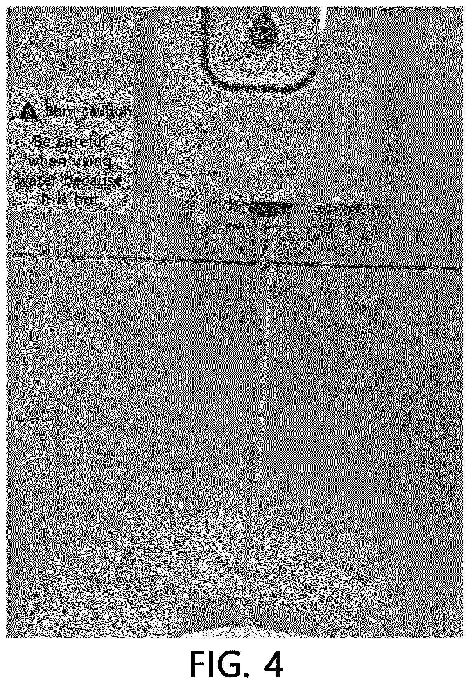

Hereinafter, the water purifier according to an exemplary embodiment of the present invention will be described with reference to the drawings. FIG. 1 is a configuration diagram illustrating each configuration and the flow of a fluid of a water purifier according to the related art, FIG. 2 is an image illustrating the flow of hot water dispensed from the water purifier according to the related art, FIG. 3 is a configuration diagram illustrating each configuration of the water purifier and the flow of a fluid according to an exemplary embodiment of the present invention, and FIG. 4 is an image illustrating the flow of hot water dispensed from a water purifier including a hot water generating unit according to an exemplary embodiment of the present invention. In order to clearly describe the present invention, it should be noted that parts that are not related to the description are omitted from the drawings.

Referring to FIG. 3, the water purifier according to an exemplary embodiment of the present invention includes a pressing unit 100 for pressurizing and supplying raw water W1, a filtering unit 200 which is provided with a reverse-osmosis filter member 210 to generate purified water W2 by filtering the pressurized raw water W1 supplied from the pressing unit 100, a hot water generating unit 300 for generating hot water W4 by receiving the pressurized purified water W2 from the filtering unit 200, a dispensing unit 600 for discharging the hot water generated from the hot water generating unit 300 to the outside, a water drain unit 700 for discharging unnecessary raw water generated from the above-described filtering unit 200 to the outside, and a control unit 400 for controlling the operation of each unit

First of all, the pressurizing unit 100 may include a pump for supplying the raw water W1 above a predetermined filtration pressure to the reverse-osmosis filter member 210, and for this purpose, the pump may be disposed in front of the reverse-osmosis filter member 210. The reverse-osmosis filter member 210 may be provided with a reverse osmosis membrane to partition the reverse-osmosis filter member 210 into a filtration side and a non-filtration side. The filtration passage member 220 which is connected to the filtration side of the reverse-osmosis filter member 210 may be provided with a pressure reducing valve and a check valve, and accordingly, the water filtered by the reverse-osmosis filter member 210 may be reduced to a preset pressure by the pressure reducing valve. Some of the raw water W1 introduced to the non-filtration side of the reverse-osmosis filter member 210 is filtered while passing through the reverse osmosis membrane, and the remaining water may not pass through the reverse osmosis membrane. The purified water W2 filtered while passing through the reverse osmosis membrane moves to the filtration side and then moves through the filtration channel member 220 connected to the filtration side. The raw water W1 that has not passed through the reverse osmosis membrane may be discharged to the outside through the water drain unit 700 that is connected to the non-filtration side.

The filtering unit 200 may further include a pre-treatment filter member 240 and a post-treatment filter member 250. The pre-treatment filter member 240 is disposed at the front end of the pressing unit 100, and the raw water W1 is first filtered by the pre-treatment filter member 240 and then may be further filtered by the reverse-osmosis filter member 210. The post-treatment filter member 250 is disposed on the filtration passage member 220 which is connected to the filtration side of the reverse-osmosis filter member 210 to further filter the purified water W2 that has been filtered through the reverse-osmosis filter member 210. The number of water filters included in the filtering unit 200 other than the reverse-osmosis filter member 210 is not particularly limited, and any water filter may be used as long as it is a water filter that is capable of filtering the raw water W1. Alternatively, the filtering unit 200 may be provided with only the reverse-osmosis filter member 210.

The purified water W2 filtered through the filtering unit 200 is moved to a purified water supply unit 260, and the purified water supply unit 260 moves the filtered purified water W2 according to the user's selection toward the dispensing unit 600 or to the hot water generating unit 300 or the cold water generating unit 500. In this case, when the filtered purified water W2 is moved toward the dispensing unit 600, the discharge of the purified water W2 may be controlled according to the opening/closing operation of the purified water valve 270. In addition, the cold water generating unit 500 may be provided with a cooling coil member for cooling the filtered purified water W2, and a liquefied low-temperature and low-pressure refrigerant flows inside the cooling coil member to cool the purified water W2, and the refrigerant vaporized while cooling the purified water W2 is supplied to the compression member and circulates in the refrigerant passage. The cold water W3 that has been cooled by the cold water generating unit 500 may be discharged through the dispensing unit 600 according to the opening/closing operation of the cold water valve 510.

Meanwhile, as described above through the background art, the water purifier according to an exemplary embodiment of the present invention aims to solve the problems of the related art. Specifically, referring to FIG. 1, in the case of the related art, hot water W4 generated from the hot water generating unit 300 is first discharged toward the dispensing unit 600 through the hot water dispensing member 380, and the steam W5 that is included in the hot water W4 has been removed through a separate exhaust line 390 which is connected to a branch point 388 that is provided at a portion of the hot water dispensing member 380. That is, in the related art, after discharging the hot water W4 in a state of including the steam W5 from the hot water generating unit 300, the steam is removed secondarily, and the removal method also have problems in that the effect of removing steam W5 is weak by using a method of collecting steam W5 for a part of the flow of continuously flowing hot water W4, and the released hot water includes a large amount of steam As a result, as illustrated in FIG. 2, a predetermined amount of the water stream moving in the direction of gravity is scattered laterally, thereby threatening the safety of the user and inhibiting the aesthetics at the same time. The water purifier according to an exemplary embodiment of the present invention solves the above-described problems by introducing a unique hot water generating unit 300 and effectively controlling the flow of a fluid associated with the hot water generating unit 300 to discharge hot water in a state where steam is removed, and as a result, as illustrated in FIG. 4, it is possible to form a regular hot water flow in a straight line along the direction of gravity. Hereinafter, the hot water generating unit according to an exemplary embodiment of the present invention will be described in more detail.

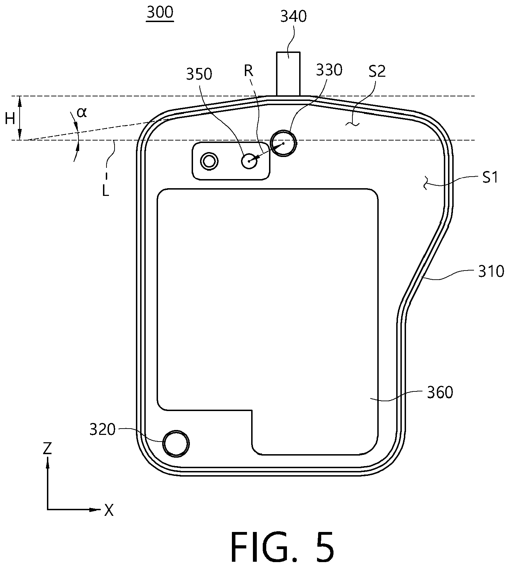

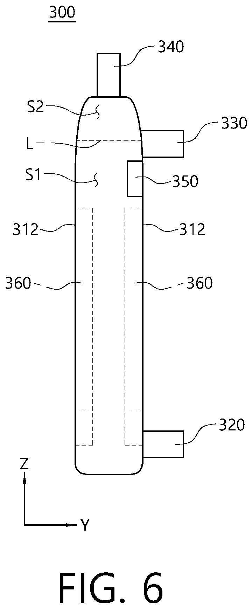

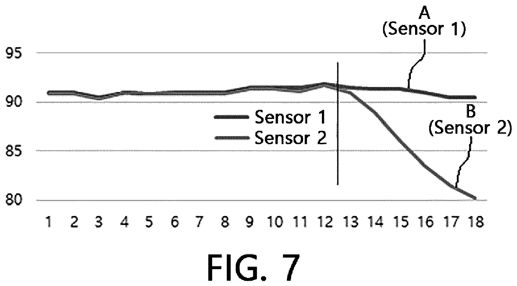

FIG. 5 is a plan view illustrating a part of the hot water generating unit according to an exemplary embodiment of the present invention, FIG. 6 is a side view illustrating a part of the hot water generating unit according to an exemplary embodiment of the present invention, and FIG. 7 is a graph illustrating the sensing accuracy of the temperature sensing member included in the hot water generating unit according to an exemplary embodiment of the present invention compared with the related art. Herein, the X direction is the width direction of the case member, the Y direction is the thickness direction of the case member, and the Z direction is the height direction of the case member. Hereinafter, in the present specification, it should be noted that the hot water generating unit may be referred to as a hot water generation apparatus if necessary. That is, when the hot water generating unit is used as a component of the water purifier according to an exemplary embodiment of the present invention, it may be denoted as a hot water generating unit, and when referred to as an independent invention, it may be denoted as a hot water generation apparatus. In this regard, the hot water generation apparatus according to an exemplary embodiment of the present invention is not limitedly applied to the above-described water purifier, and it may be applied to various appliances that supply hot water to a user, such as a cold/hot water machine, an instantaneous water heater and the like. In addition, since the description is based on the water purifier in the following description, it is described that the purified water W2 flows into the hot water generating unit, but the type of fluid flowing into the hot water generating unit is not limited thereto. That is, the raw water W1 may be directly introduced into the hot water generating unit instead of the purified water W2 depending on the type of apparatus that supplies the hot water.

As illustrated in FIG. 5, the hot water generating unit 300 includes a case member 310 in which purified water W2 is accommodated, a water inlet 320 which is disposed at a lower portion of the case member 310 such that the purified water W2 flows into the case member 310, a heating member 360 which is provided on a sidewall 312 of the case member 310 so as to heat purified water W1 that is accommodated inside the case member 310, a water outlet 330 which is disposed on the upper side of the heating member 360 such that the purified water heated by the heating member 360 flows to the outside, a steam outlet 340 which is disposed at an upper portion of the case member 310 such that steam W5 that is vaporized from the heated purified water is discharged to the outside, and a temperature sensing member 350 for sensing the temperature of purified water accommodated inside the case member 310.

First of all, the inner spaces S1, S2 of the case member 310 may be partitioned into a receiving space S1 in which the purified water W2 introduced through the water inlet 320 is accommodated and a collection space S2 which is disposed at an upper portion of the receiving space. The receiving space S1 is a space formed between both side walls 312 of the case member 310 as illustrated in FIG. 6, and the heating member 360 described above may be installed therein. Through this, after storing the purified water W2 in the inside of the case member 310, the purified water W2 may be heated by making it face-to-face with the heating member 360.

Further, in comparison with the conventional hot water generating unit 300 having only a receiving space S1, the hot water generating unit 300 of the water purifier according to an exemplary embodiment of the present invention is provided with a collection space S2 in which vapor that is vaporized from the purified water W2 can be collected at an upper part of the receiving space S1. The collection space S2 is distinguished from the receiving space S1 for accommodating the purified water W2 in a liquid state in that it is a space for accommodating vapor in a gaseous state. In this case, the collection space S2 may have an inclination surface 316 that is inclined toward the steam outlet 340 with a predetermined inclination angle as illustrated in FIG. 5. This inclination surface 316 is provided for the steam W5 to be easily discharged through the steam outlet 340, and it may guide the steam W5 such that the steam W5 in the vaporized state has certain directionality and moves quickly toward the steam outlet 340. If the inclination surface 316 does not exist in the collection space S2, since the steam is discharged only by a pressure difference between the inside and outside of the case member 310 in consideration of the free movement of gas molecules, the discharge of the steam W5 may be difficult. In this case, the inclination surface 316 preferably has an inclination angle α within 25 degrees based on the water surface of the purified water W2 stored in the case member 310. This is in consideration of the fact that, when the inclination angle α is too large, the height of the hot water generating unit 300 itself becomes enlarged, thereby hindering the miniaturization of the apparatus, and the inventors of the present invention could derive through experiments that the inclination angle within a maximum of 25 degrees is the optimal inclination angle, when the amount of steam W5 and the miniaturization of the apparatus are comprehensively considered.

In an exemplary embodiment of the present invention, as illustrated in FIG. 5, the compartment of the receiving space S1 and the collection space S2 may be divided based on a shoulder 314 of the case member 310 where the case member 310 extending along the Z direction is directed toward the steam outlet 340. That is, the receiving space S1 and the collection space S2 may be partitioned by a boundary line L connecting the starting points of the shoulders 314 that are disposed on both sides of the case member 310.

A water inlet 320 through which purified water W1 flows from the outside may be formed at a lower side of the case member 310. The water inlet 320 may be formed in the shape of an opening protruding outwardly from the sidewall 312 of the case member 310 as illustrated in FIG. 6, and the outer end of the water inlet 320 may be connected to a purified water supply member 370 to be described below. In this case, the inflow of the purified water W2 introduced through the water inlet 320 and the flow rate of the inflow may be adjusted by the opening/closing operation of the purified water supply member 370, and this will be described below.

A water outlet 330 through which the heated hot water W4 is discharged to the outside is disposed on the boundary line L that partitions the receiving space S1 and the collection space S2. That is, a portion of the water outlet 330 may be disposed on the collection space S2, and as such, the hot water generating unit 300 according to an exemplary embodiment of the present invention has a unique collection space S2 such that compared to the related art, it is possible to secure a space for disposing the water outlet 330 to be higher in the height direction. Meanwhile, the water outlet 330 may also be formed in the shape of an opening protruding outwardly from the side wall 312 of the case member 310 similar to the water inlet 320, and the outer end of the water outlet 330 may be connected to a hot water dispensing member 380. In addition, whether the hot water discharged through the water outlet 330 flows out and the flow rate of the outflow may be adjusted by the opening/closing operation of the hot water extracting valve 386 that is provided in the hot water dispensing member 380, and this will be described below.

In an exemplary embodiment of the present invention, the heating member 360 is a resistor that receives power and radiates heat, and as illustrated in FIGS. 5 and 6, it may be formed in a plate-shaped (plate type) structure extending along the sidewall 312 of the case member 310 such that packaging efficiency can be enhanced, and the heating capacity may be changed by adjusting the power supplied to the heating member 360. In this case, a pair of the heating members 360 may be disposed on both sides of the wall 312 forming the receiving space S1 of the case member 310 to face each other. In addition, as illustrated in FIG. 5, the heating members 360 may be disposed to be spaced apart from each other by a predetermined distance based on the boundary line L and the Z direction partitioning the receiving space S1 and the collection space S2.

Referring to FIGS. 5 and 6 again, a temperature sensing member 350 for sensing the temperature of the heated purified water W2 may be installed at a position that is adjacent to the water outlet 330 of the case member 310, and a known temperature sensor that is capable of outputting an output value that changes according to the temperature of a fluid may be applied to the temperature sensing member 350. In this case, the temperature sensing member 350 is disposed at a distance adjacent to the water outlet 330, and is preferably disposed within a radius of 20 mm from the center of the water outlet 330. This is because, when the temperature sensing member 350 is disposed to be spaced apart from the water outlet 330 by 20 mm or more, it becomes too far from the water outlet 330 to accurately detect the temperature of the hot water W4 just before the water dispensing. In addition, the temperature sensing member 350 may be disposed to be adjacent to the water outlet 330, but may be disposed below the water outlet 330. Herein, the fact that the temperature sensing member 350 is disposed below the water outlet 330 means that the uppermost portion of the temperature sensing member 350 is disposed below the center of the water outlet 330 based on the Z-axis direction. Therefore, the uppermost portion of the temperature sensing member 350 may be located below the center of the water outlet 330, and may be located above the lowermost portion of the water outlet 330 as illustrated in FIG. 5, and it may be installed at a position lower than the lowermost part of the water outlet 330 as illustrated in FIG. 6. In addition, the temperature sensing member 350 may be disposed at an upper portion of the heating member 360 so as not to be damaged by the heating member 360. That is, the temperature sensing member 350 may be disposed at a predetermined interval that is formed between the heating member 360 and the boundary line L. As described above, the fact that the temperature sensing member 350 can be disposed below the water outlet 330 in the hot water generating unit 300 according to an exemplary embodiment of the present invention is because, as described above, it is possible to secure a sufficient space by disposing a portion of the water outlet 330 on the collecting space S2. If there is no such space, there is a problem in that the temperature sensing member 350 has to be disposed at the same height side by side with the water outlet 330 as in the related art and in this case, there is a problem in that the accuracy of the temperature sensing member 350 is impaired.

Specifically, the relatively high-temperature purified water among the purified water W2 heated inside the case member 310 moves upward due to the convection of water. According to this trend, even after the heat supply by the heating member 360 is stopped, the high-temperature purified water W2 still accumulates in the upper side of the case member 310, that is, in the area adjacent to the water outlet 330, and therefore, when the collection space S2 is absent and the water outlet 330 and the temperature sensing member 350 must be arranged side by side with each other, the heating member 360 does not operate, and even though the temperature of the whole purified water W2 in the case member 310 is lowered, the temperature sensing member 350 has no choice but to sense only the temperature of the high-temperature purified water W2 that is still pooled in the upper side. As a result, the temperature sensed by the temperature sensing member 350 does not reflect the temperature of the whole purified water W2, and if the overall purified water W2 temperature is lowered and heat generated by the heating member 360 is required, there is a problem in that the re-heating of the heating member 360 is delayed by recognizing that a large amount of the purified water W2 is present. However, when the temperature sensing member 350 is disposed below the center of the water outlet 330 as in the hot water generating unit 300 according to an exemplary embodiment of the present invention, the temperature of the purified water W2, which is constantly changing according to the supply of heat by the heating member 360, may be sensed more sensitively.

For example, referring to FIG. 7, when the water outlet 330 and the temperature sensing member 350 are arranged side by side (A), after the heat supply by the heating member 360 is stopped (in the drawing, between 12 seconds and 13 seconds), the temperature of the purified water W2 before the water dispensing is still recognized as a high temperature of 90 degrees or more. In comparison, when the temperature sensing member 350 is disposed below the water outlet 330 as in the hot water generating unit 300 according to an exemplary embodiment of the present invention (B), when the supply of heat by the heating member 360 is stopped, a drop in temperature may be sensed immediately, and accordingly, since the heating member 360 quickly starts re-heating, high-temperature purified water W2 may be supplied to the user more quickly.

In an exemplary embodiment of the present invention, a steam outlet 340 through which the steam can be discharged to the outside of the case member 310 is disposed in the uppermost portion of the case member 310, that is, the uppermost portion of the collection space S2. The steam outlet 340 may be connected to a steam outlet member 390 to be described below, and in this regard, it will be described in detail through the corresponding part. As such, the hot water generating unit 300 according to an exemplary embodiment of the present invention is provided with a steam outlet 340 on one side of the case member 310 separately from the water outlet 330 such that only the hot water W4 in a state where the steam W5 has been removed may be discharged through the water outlet 330, and particularly, the steam may be discharged more easily through the collection space S2 having the inclination surface 316, and as reviewed through FIG. 1, this is distinguished from the related art of discharging the hot water W4 in a state of including the steam W5 through the water outlet 330.

Referring to FIG. 3 again, in an exemplary embodiment of the present invention, the water inlet 320, water outlet 330 and steam outlet 340 through which the fluids W1, W2, W4, W5 associated with the case member 310 flow in and out are respectively connected to the purified water supply member 370 (when raw water is supplied instead of purified water, the purified water supply member may also be referred to as a raw water supply member), the hot water dispensing member 380 and the steam discharging member 390. In this case, the purified water supply member 370, the hot water dispensing member 380 and the steam discharge member 390 are all tubular members including a hollow in which a fluid can be moved therein, and may be formed of, for example, flexible tubes. Specifically, the purified water supply member 370 has one end connected to the water inlet 320 and the other end connected to the purified water supply unit 260 (when raw water is supplied instead of purified water, the purified water supply unit may be referred to as a raw water supply) such that fluid communication is established between the water inlet 320 and the purified water supply unit 260. Similarly, the hot water dispensing member 380 has one end connected to the water outlet 330 and the other end connected to the dispensing unit 600 to function as a path for supplying hot water W4 to the user, and the steam discharge member 390 has one end connected to the steam outlet 340 and the other end connected to the water drain unit 700 to function as a path in which the steam W5 discharged from the case member 310 is moved toward the water drain unit 700 and discharged to the outside. In addition, the purified water supply member 370, the hot water dispensing member 380 and the steam discharge member 390 are provided with valves 376, 386, 396 that allow or block the movement of the fluid, respectively. The purified water supply valve 376 provided in the purified water supply member 370 (when raw water is supplied instead of purified water, the purified water supply valve may also be referred to as a raw water supply valve) controls the movement of purified water flowing into the side of the case member 310, and the hot water extraction valve 386 provided in the hot water dispensing member 380 may control the movement of the hot water W4 flowing out from the case member 310, and the steam discharge valve 396 provided in the steam discharge member 390 may control the movement of the steam W5 flowing out from the case member 310.

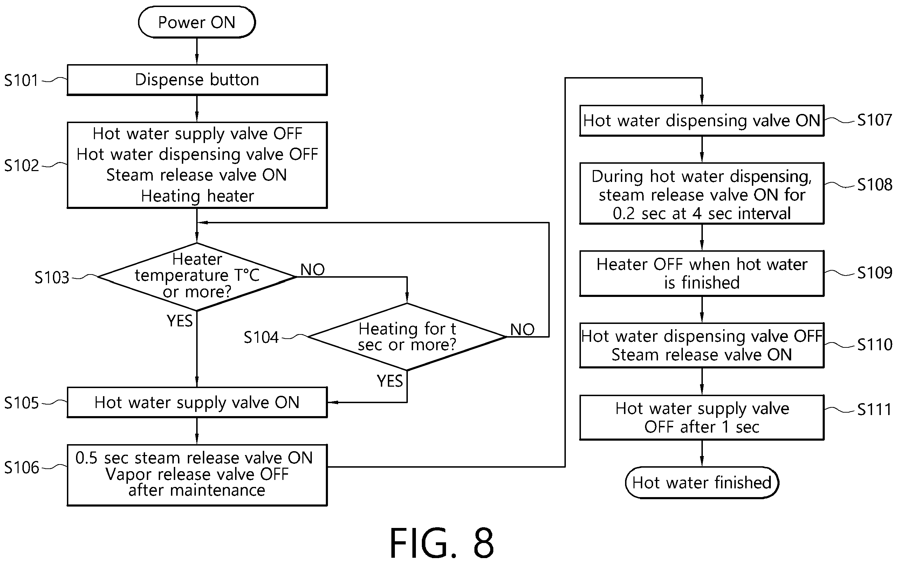

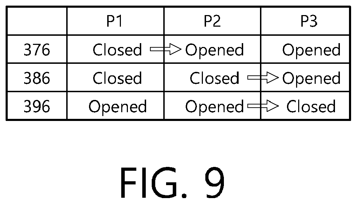

FIG. 8 is a flowchart illustrating that the control unit (or a control member of the hot water generation apparatus) of a water purifier including a hot water generating unit according to an exemplary embodiment of the present invention sequentially controls each configuration, and FIG. 9 is a table showing the opening and closing states of each of the valves included in the hot water generating unit according to the fluid inflow and outflow states of the hot water generating unit according to an exemplary embodiment of the present invention. For reference, in the present specification, the control unit is a configuration including a control member to be described below, and in the drawings, the control unit and the control member are denoted by the same reference numerals for simplicity, and it is noted that the control unit may perform the same function as the control member.

The hot water generating unit 300 according to an exemplary embodiment of the present invention includes a control member 400 which is capable of integrally controlling the opening and closing of the above-described purified water supply valve 376, hot water extraction valve 386 and steam discharge valve 396. Herein, the integral control of the plurality of valves 376, 386, 396 means that in order to control the inflow and outflow of a fluid associated with the hot water generating unit 300, the plurality of valves are controlled in consideration of the mutual influence relationship between the plurality of valves 376, 386, 396, instead of simply considering the opening and closing of any one valve.

Hereinafter, the process in which the control unit (or control member) controls each configuration will be described in more detail with reference to the drawings. First of all, referring to FIGS. 8 and 9, when the user presses the hot water dispensing button for the first time (S101), a hot water dispensing signal is applied, and accordingly, the control unit 400 controls to a first state P1 in which the purified water supply valve 376 and the hot water dispensing valve 386 of the hot water generating unit 300 are closed, and only the steam discharge valve 396 is opened, and power is supplied to the heating member 360 to heat the purified water stored inside the case member 310 (S102). Through this, the steam generated at the initial stage of heating may be discharged toward the water drain unit 700 through the steam outlet 340 via the collection space S2. Thereafter, the control unit 400 determines based on the temperature information received from the temperature sensing member 350 of the hot water generating unit 300 (S103) such that when the temperature of the purified water W2 is greater than or equal to a predetermined temperature T, (e.g., 83°C), as illustrated in FIG. 9, it controls the hot water generating unit 300 to a second state P2 in which the purified water supply valve 376 is opened in the first state P1 (S105). In this case, the fact that the control unit 400 opens the purified water supply valve 376 to supply purified water W1 to the receiving space S1 is because instantaneous pressure is applied to the collection space S2 through this such that the steam W5 is more effectively to be leaked. As a result, the hot water generating unit 300 according to an exemplary embodiment of the present invention may more effectively remove the steam W5 before the full-scale hot water W4 is dispensed. However, even if the temperature of the purified water W2 is less than a predetermined temperature T, the control unit 400 determines whether the heating time by the heating member 360 is greater than or equal to a critical time t (S104), and if the heating time is greater than equal to the critical time t, it opens the purified water supply valve 376 such that the hot water generating unit 300 is in the above-described second state P2 even though the temperature of the purified water W1 has not reached the predetermined temperature T (S105). This is because if the time required for hot water dispensing is excessively delayed, it may cause inconvenience to the user. Through this, the hot water generating unit 300 according to an exemplary embodiment of the present invention may provide a more satisfactory user experience by flexibly responding to unexpected situations. Next, the control unit 400 closes the steam discharge valve 396 that has been opened from the second state P2 after maintaining the second state P2 for a predetermined time, for example, 0.5 seconds (S106), and at the same time, it controls to a third state P3 in which the hot water dispensing valve 386 is opened (S107). Closing the steam discharge valve 396 when the hot water W4 is dispensed in this way is to prevent a portion of the hot water W4 from flowing out through the steam discharge valve 396 at the same time as the pressure is formed inside the case member 310 such that the hot water is discharged. Through this, the hot water generating unit 300 according to an exemplary embodiment of the present invention may minimize the loss of hot water W4 that may occur due to the introduction of the steam outlet 340.

However, while the hot water W4 is continuously dispensed with the hot water extraction valve 386 opened after the initial water discharge, the steam discharge valve 396 does not remain closed continuously, but the operation of momentarily opening and closing again may be repeated for a short period of time at every predetermined interval (S108). For example, during continuous water dispensing, the steam discharge valve 396 may repeat the operation of being opened for 0.2 seconds and closed at an interval of 4 seconds. Through this, the hot water generating unit 300 according to an exemplary embodiment of the present invention may effectively discharge the steam W5 by temporarily discharging the steam W5 after collecting the steam W5 to reach a predetermined pressure. Thereafter, when a hot water output stop signal is applied by the user, the control unit 400 stops the heating of the purified water W1 inside the case member 310 by stopping the operation of the heating member 360 (S109). Then, the control unit 400 switches the hot water extraction valve 386 to the closed state, and opens the steam discharge valve 396 to finally discharge the remaining steam inside the case member 310 (S110). After the steam discharge valve 396 is opened and a predetermined time has elapsed, the purified water supply valve 376 is also closed to block further supply of purified water (S111). In this way, closing the purified water supply valve 386 later than the hot water dispensing valve 386 is to effectively discharge the steam W5 by forming a pressure in the receiving space S1 and the collection space S2 by continuously supplying purified water W2 instantaneously.

As described above, the hot water generation apparatus 300 according to the present invention is disposed at an upper portion of the receiving space in which the purified water is accommodated in the case member, has a predetermined inclination angle, and introduces the collection space S2 having an inclined inclination surface at the same time, and by disposing a steam outlet through which steam can be discharged separately from the hot water outlet at an upper portion of the collection space S2, the steam is removed through the steam outlet along the inclination surface before discharging the hot water to the outside, and thus, hot water that does not include steam may be dispensed. Through this, the hot water generation apparatus 300 according to the present invention forms a straight-line regular hot water flow along the direction of gravity, thereby securing user safety and improving aesthetics to improve user satisfaction. Further, in the hot water generation apparatus 300 according to an exemplary embodiment of the present invention, a portion of the water outlet 330 is disposed on the collection space S2 by using the spatial margin secured through the introduction of the collection space S2 such that the temperature sensing member 350 may be disposed below the water outlet 330, and through this, it is possible to enhance the sensing accuracy of the temperature sensing member 350. In addition, the hot water generation apparatus 300 according to an exemplary embodiment of the present invention integrally controls the plurality of valves 376, 386, 396 for controlling the inflow and outflow of fluids associated with the hot water generation apparatus 300 sequentially such that while the steam W5 may be more effectively discharged, the loss of the hot water W4 through the steam outlet 340 may be minimized.

Although the exemplary embodiments of the present invention have been described, the spirit of the present invention is not limited to the exemplary embodiments set forth herein. In addition, although those of ordinary skill in the art who understand the spirit of the present invention may easily propose other exemplary embodiments by modifying, changing, deleting or adding elements within the same spirit, but this will be also within the scope of the present invention.

## Claims

1. A hot water generation apparatus, comprising:
a case member which is provided with a receiving space in which raw water is accommodated and a collection space that is disposed at an upper portion of the receiving space;
a water inlet which is disposed at a lower portion of the case member such that the raw water flows into the case member;
a plate-shaped heating member which is provided on a sidewall of the case member so as to heat raw water that is accommodated inside the case member;
a water outlet which is disposed on the upper side of the plate-shaped heating member such that the raw water heated by the plate-shaped heating member flows to the outside;
a steam outlet which is disposed at an upper portion of the collection space such that steam that is vaporized from the heated raw water is discharged to the outside through the collection space; and
a temperature sensing member for sensing the temperature of raw water accommodated inside the case member,
wherein the collection space has an inclination surface which has a predetermined inclination angle to guide the steam toward the steam outlet and is inclined toward the steam outlet, and
wherein the temperature sensing member is installed between the water outlet and the plate-shaped heating member based on a height direction of the case member.

2. The hot water generation apparatus of claim 1, wherein the predetermined inclination angle is within 25 degrees based on a water surface of the raw water.

3. The hot water generation apparatus of claim 1, wherein the temperature sensing member is installed to be located below the water outlet.

4. The hot water generation apparatus of claim 3, wherein the temperature sensing member is installed within a radius of 20 mm around the water outlet.

5. The hot water generation apparatus of claim 1, wherein at least a portion of the water outlet is installed so as to cross a boundary line between the receiving space and the collection space among the side walls.

6. The hot water generation apparatus of claim 1, further comprising:
a raw water supply member which is a tubular member having one end connected to the water inlet and the other end connected to a raw water supply unit, and is provided with a raw water supply valve that allows or blocks the raw water to flow into the case member;
a hot water dispensing member which is a tubular member having one end connected to the water inlet and the other end connected to a dispensing unit, and is provided with a hot water extraction valve that allows or blocks the heated raw to flow out of the case member;
a steam discharge member which is a tubular member having one end connected to the steam outlet and the other end connected to a water drain, and is provided with a steam discharge valve that allows or blocks the steam to flow out of the case member; and
a control member which integrally controls the opening and closing of the raw water supply valve, the hot water dispensing valve and the steam discharge valve.

7. The hot water generation apparatus of claim 6, wherein the control member controls to a first state in which the raw water supply valve and the hot water dispensing valve are closed, and the steam discharge valve is opened, when a hot water dispensing signal is initially applied, controls to a second state in which the raw water supply valve is opened, when the heated raw water has a temperature higher than a predetermined temperature in the first state, and controls to a third state in which the steam discharge valve is closed, and at the same time, the hot water dispensing valve is opened, after a predetermined time from the second state.

8. The hot water generation apparatus of claim 7, wherein the control member controls to a second state in which the raw water supply valve is opened even when the heated raw water is below the predetermined temperature, when the first state is maintained for a critical time or longer.

9. The hot water generation apparatus of claim 6, wherein the control member repeats the control of opening and closing the steam discharge valve for a certain time at predetermined intervals, while the raw water supply valve and the hot water dispensing valve are opened, and continuous water dispensing is in progress.

10. A water purifier, comprising:
a pressing unit for pressurizing and supplying raw water;
a filtering unit which is provided with a filter member to generate purified water by filtering the pressurized raw water supplied from the pressing unit;
a hot water generating unit for generating hot water by receiving the pressurized purified water from the filtering unit;
a dispensing unit for discharging the hot water generated from the hot water generating unit to the outside;
a water drain unit for discharging unnecessary raw water generated from the filtering unit to the outside; and
a control unit for controlling the operation of each unit,
wherein the hot water generating unit is provided with a case member which is provided with a receiving space in which the purified water is accommodated and a collection space that is disposed at an upper portion of the receiving space, a water inlet which is disposed at a lower portion of the case member such that the purified water flows into the case member, a plate-shaped heating member which is provided on a sidewall of the case member so as to heat purified water that is accommodated inside the case member, a water outlet which is disposed on the upper side of the plate-shaped heating member such that the purified water heated by the plate-shaped heating member flows out, a steam outlet which is disposed at an upper portion of the collection space such that steam that is vaporized from the heated purified water is discharged to the outside through the collection space, and a temperature sensing member for sensing the temperature of purified water accommodated inside the case member,
wherein the collection space has an inclination surface which has a predetermined inclination angle to guide the steam toward the steam outlet and is inclined toward the steam outlet,
wherein the temperature sensing member is installed between the water outlet and the plate-shaped heating member based on a height direction of the case member,
wherein the hot water generating unit and the filtering unit are connected through a purified water supply member having a purified water supply valve that allows or blocks the purified water to flow into the case member,
wherein the hot water generating unit and the dispensing unit are connected through a hot water dispensing member having a hot water extraction valve that allows or blocks the hot water to flow out of the case member,
wherein the hot water generating unit and the water drain unit are connected through a steam discharge member having a steam discharge valve that is provided with a steam discharge valve that allows or blocks the steam to flow out of the case member, and
wherein the control unit integrally controls the opening and closing of the purified water supply valve, the hot water extraction valve and the steam discharge valve.

11. A method for controlling a hot water generation apparatus which comprises a case member which is provided with a receiving space in which raw water is accommodated and a collection space that is disposed at an upper portion of the receiving space, a water inlet which is disposed at a lower portion of the case member such that the raw water flows into the case member, a plate-shaped heating member which is provided on a sidewall of the case member so as to heat raw water that is accommodated inside the case member, a water outlet which is disposed on the upper side of the plate-shaped heating member such that the raw water heated by the plate-shaped heating member flows out, a steam outlet which is disposed at an upper portion of the collection space such that steam that is vaporized from the heated raw water is discharged to the outside through the collection space, a raw water supply valve for allowing or blocking the raw water to flow inside the case member, a hot water dispensing valve for allowing or blocking the heated raw water to flow out of the case member, and a steam discharge valve for allowing or blocking the steam to flow out of the case member, the method comprising the steps of:
controlling to a first state in which the raw water supply valve and the hot water dispensing valve are closed, and the steam discharge valve is opened, when a hot water dispensing signal is initially applied;
controlling to a second state in which the raw water supply valve is opened, when the heated raw water has a temperature higher than a predetermined temperature in the first state; and
controlling to a third state in which the steam discharge valve is closed, and at the same time, the hot water dispensing valve is opened, after a predetermined time from the second state.

12. The method of claim 11, further comprising the step of:
repeating the control of opening and closing the steam discharge valve for a certain time at predetermined intervals, while the raw water supply valve and the hot water dispensing valve are opened, and continuous water dispensing is in progress.
